# EUROPEAN PATENT APPLICATION

(11) **EP 4 473 846 A1**
(43) Date of publication of application: **11.12.2024**
(21) Application number: 23749758.1
(22) Date of filing: 01.02.2023
(51) Int. Cl.: A23L 27/00

(54) **METHOD FOR SUPPRESSING P-CRESOL ODOR**

(30) Priority: 03.02.2022 JP 2022015919
(71) Applicant: AJINOMOTO CO., INC., Chuo-ku Tokyo 104-8315 (JP)
(72) Inventor: KAWATO, Yayoi, Kawasaki-shi, Kanagawa 210-8681 (JP); NAKADA, Yuji, Kawasaki-shi, Kanagawa 210-8681 (JP); IJICHI, Chiori, Kawasaki-shi, Kanagawa 210-8681 (JP); SOMEKAWA, Yasuko, Kawasaki-shi, Kanagawa 210-8681 (JP); SUGIYAMA, Shingo, Kawasaki-shi, Kanagawa 210-8681 (JP)
(74) Representative: Strehl Schübel-Hopf & Partner
(86) International application number: PCT/JP2023/003135
(87) International publication number: WO 2023/149442

(57) **Abstract**

A technique for suppressing p-cresol odor is provided. By utilizing magnolol, propyl gallate, 2-methylbenzenethiol, E-β-damascenone, cinnamyl cinnamate, 2-thiophenethiol, 2- furfurylthiol, tetradecanal, sclareol, trans,trans-2,4-decadienal, nootkatone, piperine, trans,trans-2,4-nonadienal, or S-(2-methyl-3-furyl) ethanethioate, p-cresol odor of a food is suppressed.

## Description

### TECHNICAL FIELD

The present invention relates to a technique for suppressing p-cresol odor. The present invention can specifically relate to a method for suppressing p-cresol odor.

### BACKGROUND ART

Citral is an aromatic ingredient that presents a lemon flavor and is found in citrus fruits such as lemon and herbs such as lemongrass. Citral is used by, for example, adding it to food products such as beverages. Citral can decrease during, for example, heating or storage to generate a degradation odor (off-flavor). Examples of substances responsible for citral-derived degradation odor include 4-methylacetophenone and p-cresol. Therefore, it is desired to develop a technique to suppress p-cresol odor.

For example, techniques for suppressing p-cresol odor using various ingredients have been reported (Patent documents 1 to 6).

### PRIOR ART DOCUMENTS

### PATENT DOCUMENTS

[Patent document 1] Japanese Patent Publication No. 2015-180715
[Patent document 2] Japanese Patent Publication No. 2002-338990
[Patent document 3] Japanese Patent Publication No. 2008-280539
[Patent document 4] Japanese Patent Publication No. 2004-123788
[Patent document 5] Japanese Patent Publication No. 2007-039610
[Patent document 6] WO2021/235360

### SUMMARY OF THE INVENTION

### PROBLEMS TO BE SOLVED BY THE INVENTION

An object of the present invention is to provide a technique for suppressing p-cresol odor. Specifically, the object of the present invention may be to provide a method for suppressing p-cresol odor.

### MEANS FOR SOLVING THE PROBLEMS

The inventors of the present invention diligently studied to achieve the aforementioned object, as a result, found various ingredients that suppress p-cresol odor and accomplished the present invention.

That is, the present invention can be embodied, for example, as follows
[1] A composition for suppressing p-cresol odor of a food, comprising the following ingredient (A):
   (A) at least one type of ingredient selected from the group consisting of magnolol, propyl gallate, 2-methylbenzenethiol, E-β-damascenone, cinnamyl cinnamate, 2-thiophenethiol, 2-furfurylthiol, tetradecanal, sclareol, trans,trans-2,4-decadienal, nootkatone, piperine, trans,trans-2,4-nonadienal, and S-(2-methyl-3-furyl) ethanethioate.
[2] A composition for producing a food, comprising the following ingredient (A):
   (A) at least one type of ingredient selected from the group consisting of magnolol, propyl gallate, 2-methylbenzenethiol, E-β-damascenone, cinnamyl cinnamate, 2-thiophenethiol, 2-furfurylthiol, tetradecanal, sclareol, trans,trans-2,4-decadienal, nootkatone, piperine, trans,trans-2,4-nonadienal, and S-(2-methyl-3-furyl) ethanethioate.
[3] The composition described above, wherein the food is a food of which p-cresol odor is suppressed.
[4] The composition described above, wherein the food comprises p-cresol and/or an ingredient that can generate p-cresol.
[5] The composition described above, wherein the ingredient that can generate p-cresol is citral.
[6] A method for suppressing p-cresol odor of a food, comprising the step of adding the following ingredient (A) to a raw material of the food:
   (A) at least one type of ingredient selected from the group consisting of magnolol, propyl gallate, 2-methylbenzenethiol, E-β-damascenone, cinnamyl cinnamate, 2-thiophenethiol, 2-furfurylthiol, tetradecanal, sclareol, trans,trans-2,4-decadienal, nootkatone, piperine, trans,trans-2,4-nonadienal, and S-(2-methyl-3-furyl) ethanethioate.
[7] A method for producing a food, comprising the step of adding the following ingredient (A) to a raw material of the food:
   (A) at least one type of ingredient selected from the group consisting of magnolol, propyl gallate, 2-methylbenzenethiol, E-β-damascenone, cinnamyl cinnamate, 2-thiophenethiol, 2-furfurylthiol, tetradecanal, sclareol, trans,trans-2,4-decadienal, nootkatone, piperine, trans,trans-2,4-nonadienal, and S-(2-methyl-3-furyl) ethanethioate.
[8] The method described above, wherein the food is a food of which p-cresol odor is suppressed.
[9] The method described above, wherein the food or the raw material comprises p-cresol and/or an ingredient that can generate p-cresol.
[10] The method described above, wherein the ingredient that can generate p-cresol is citral.
[11] The method described above, wherein the method comprises the step of heating the food or raw material comprising the ingredient that can generate p-cresol.
[12] The method described above, wherein the ingredient (A) is added so that concentration thereof at the time of eating is 0.001 ppt (w/w) to 1000 ppm (w/w).

### MODES FOR CARRYING OUT THE INVENTION

Hereafter, the present invention will be explained in detail.

### <1> Active ingredient

For suppressing p-cresol odor, the following ingredient (A) is used as an active ingredient:
(A) at least one type of ingredient selected from the group consisting of magnolol, propyl gallate, 2-methylbenzenethiol, E-β-damascenone, cinnamyl cinnamate, 2-thiophenethiol, 2-furfurylthiol, tetradecanal, sclareol, trans,trans-2,4-decadienal, nootkatone, piperine, trans,trans-2,4-nonadienal, and S-(2-methyl-3-furyl) ethanethioate.

The ingredient (A) is also referred to as the "active ingredient". As the ingredient (A), one type of ingredient may be used, or a combination of two or more types of ingredients may be used. The combination for the active ingredient is not particularly limited. Examples of the combination for the active ingredient include combinations including sclareol. Specific examples of the combination for the active ingredient include combinations of sclareol with trans,trans-2,4-decadienal, S-(2-methyl-3-furyl) ethanethioate, or nootkatone.

By utilizing the active ingredient, p-cresol odor of a food can be suppressed, i.e., an effect of suppressing p-cresol odor of a food can be obtained. This effect is also referred to as the "masking effect". The suppression of p-cresol odor of a food is also referred to simply as "suppression of p-cresol odor". The "suppression of p-cresol odor" is also referred to as "reduction of p-cresol odor" or "masking of p-cresol odor". The "suppression of p-cresol odor" encompasses both suppression of p-cresol odor that may occur in the future and suppression of p-cresol odor that has already occurred. In addition, the "suppression of p-cresol odor" also encompasses making p-cresol odor completely disappear. The term "p-cresol odor" refers to the odor presented by p-cresol, which can be a causative agent of citral-derived degradation odor. Therefore, suppression of p-cresol odor may suppress, for example, degradation odor derived from citral. In addition, the suppression of p-cresol odor may suppress, for example, degradation odor of an object (e.g., food) containing citral. Citral may be contained in citrus fruits such as lemon and herbs such as lemongrass. By suppressing p-cresol odor, specifically, for example, degradation odor derived from lemon (e.g., lemon juice) may be suppressed. Specifically, the use of the active ingredient may suppress p-cresol odor of a food compared with the case where the active ingredient is not used. Therefore, the masking effect can be determined by measuring and comparing p-cresol odors in foods utilizing the active ingredient and not utilizing the active ingredient. That is, if intensity of p-cresol odor of a food utilizing the active ingredient is lower than that of the food not utilizing the active ingredient, it can be determined that the masking effect has been achieved. The measurement and comparison of degradation odor such as p-cresol odor can be carried out by, for example, sensory evaluation conducted by a panel of experts.

Degradation odors such as p-cresol odor may be classified into, for example, initial, middle, and after degradation odors. In the case of liquids (in the case of liquid foods), the terms "initial", "middle", and "after" used for degradation odors such as p-cresol odor are used to mean degradation odors sensed in the periods of 0 to 1 second, 1 to 3 seconds, and 3 to 5 seconds after eating (after the food is put into the mouth), respectively. In the case of solids (in the case of solid foods), the terms "initial", "middle", and "after" used for degradation odors such as p-cresol odor are used to mean degradation odors sensed in the periods of 0 to 4 seconds, 4 to 10 seconds, and 10 to 15 seconds after eating (after the food is put into the mouth), respectively. For the present invention, the term "solid" means a form other than liquid, and encompasses paste, gel, and so forth. By utilizing the active ingredient, for example, initial degradation odor, middle degradation odor, after degradation odor, or a combination thereof may be suppressed. By utilizing the active ingredient, in particular, initial and middle degradation odors or initial, middle and after degradation odors may be suppressed.

As the active ingredient, commercially available products may be used, or those appropriately produced and obtained may be used. The method for producing the active ingredient is not particularly limited. For example, the active ingredient can be produced by chemical synthesis, enzymatic reaction, fermentation, extraction, or a combination thereof. The active ingredient may or may not be purified to a desired degree. In other words, as the active ingredient, a purified product may be used, or a material containing the active ingredient may be used. For example, as the active ingredient, a material having a content of the active ingredient of 1% (w/w) or higher, 5% (w/w) or higher, 10% (w/w) or higher, 30% (w/w) or higher, 50% (w/w) or higher, 70% (w/w) or higher, 90% (w/w) or higher, or 95% (w/w) or higher may be used.

In the case of using a material containing the active ingredient, the amount of the active ingredient (e.g., content (concentration) or amount to be used) shall be calculated on the basis of the amount of the active ingredient itself in the material.

### <2> Composition of the present invention

The composition of the present invention is a composition containing the active ingredient.

That is, the composition of the present invention is a composition containing the following ingredient (A):
(A) at least one type of ingredient selected from the group consisting of magnolol, propyl gallate, 2-methylbenzenethiol, E-β-damascenone, cinnamyl cinnamate, 2-thiophenethiol, 2-furfurylthiol, tetradecanal, sclareol, trans,trans-2,4-decadienal, nootkatone, piperine, trans,trans-2,4-nonadienal, and S-(2-methyl-3-furyl) ethanethioate.

By utilizing the composition of the present invention, p-cresol odor of a food can be suppressed, i.e., the masking effect can be obtained. Therefore, the composition of the present invention may be utilized for suppressing p-cresol odor of a food. That is, the composition of the present invention may be, for example, a composition for suppressing p-cresol odor of a food.

By utilizing the composition of the present invention, a food of which p-cresol odor is suppressed can also be produced. Therefore, the composition of the present invention may be utilized in production of a food (specifically, production of a food of which p-cresol odor is suppressed). That is, the composition of the present invention may be, for example, a composition for producing a food (specifically, production of a food of which p-cresol odor is suppressed).

The composition of the present invention may be, for example, a seasoning. The composition of the present invention may specifically be, for example, a seasoning for suppressing p-cresol odor of a food, and may be a seasoning for producing a food (specifically, producing a food of which p-cresol odor is suppressed).

The composition of the present invention may be utilized for suppressing p-cresol odor of a food or for producing a food in the manner described in the embodiment of the method of the present invention described later.

The composition of the present invention may consist of the active ingredient or may contain an ingredient other than the active ingredient. The composition consisting of the active ingredient may be excluded from the composition of the present invention. As the ingredient other than the active ingredient, one type of ingredient may be used, or a combination of two or more types of ingredients may be used.

The ingredient other than the active ingredient is not particularly limited as long as the masking effect is not impaired. The ingredient other than the active ingredient can be selected according to various conditions, such as, for example, the type of food. Examples of the ingredient other than the active ingredient include ingredients used in foods or pharmaceuticals. Specific examples of the ingredient other than the active ingredient include the raw materials of foods described below. Specific examples of the ingredient other than the active ingredient also include cinnamaldehyde. Cinnamaldehyde may be used in combination with any type of the active ingredient. Cinnamaldehyde may be used in combination with, for example, sclareol. The use of cinnamaldehyde in combination with the active ingredient may, for example, improve the masking effect compared with the case where only the active ingredient is used.

The composition of the present invention can be produced by, for example, mixing the active ingredient and optionally another ingredient as appropriate.

The composition of the present invention may be, for example, appropriately made into a preparation. When the composition of the present invention is made into a preparation, an additive may be used as appropriate. Examples of the additive include excipient, binder, disintegrating agent, lubricant, stabilizer, flavoring agent, diluent, surfactant, and solvent. The additive can be appropriately selected depending on various conditions, such as the form of the composition of the present invention.

The form of the composition of the present invention is not particularly limited. The composition of the present invention may be in an arbitrary form, for example, in the form of powder, flake, tablet, paste, liquid, or the like.

The contents and content ratios of the ingredients (i.e., active ingredient and optionally other ingredient) in the composition of the present invention are not particularly limited as long as the masking effect can be obtained. The contents and content ratios of the ingredients in the composition of the present invention can be appropriately set according to various conditions, such as the mode of use of the composition of the present invention.

The content of the active ingredient in the composition of the present invention is more than 0% (w/w) and not more than 100% (w/w). The content of the active ingredient in the composition of the present invention is, for example, 1 ppt (w/w) or higher, 10 ppt (w/w) or higher, 100 ppt (w/w) or higher, 1 ppb (w/w) or higher, 10 ppb (w/w) or higher, 100 ppb (w/w) or higher, 1 ppm (w/w) or higher, 10 ppm (w/w) or higher, 100 ppm (w/w) or higher, 1000 ppm (w/w) or higher, 1% (w/w) or higher, 2% (w/w) or higher, 5% (w/w) or higher, or 10% (w/w) or higher, and may be 100% (w/w) or lower, lower than 100% (w/w), 99.9% (w/w) or lower, 90% (w/w) or lower, 50% (w/w) or lower, 20% (w/w) or lower, 10% (w/w) or lower, 5% (w/w) or lower, 2% (w/w) or lower, 1% (w/w) or lower, 1000 ppm (w/w) or lower, 100 ppm (w/w) or lower, 10 ppm (w/w) or lower, or 1 ppm (w/w) or lower, or may be in a range defined by any non-contradictory combination of these exemplary minimum and maximum contents. The content of the active ingredient in the composition of the present invention may specifically be, for example, 1 ppt (w/w) to 1 ppm (w/w), 1 ppm (w/w) to 10 ppm (w/w), 10 ppm (w/w) to 100 ppm (w/w), 100 ppm (w/w) to 1000 ppm (w/w), 1000 ppm (w/w) to 1% (w/w), 1% (w/w) to 10% (w/w), or 10% (w/w) to 20% (w/w). The content of the active ingredient in the composition of the present invention may specifically be, for example, 1 ppt (w/w) to 10% (w/w), 1 ppt (w/w) to 1% (w/w), or 1 ppt (w/w) to 1000 ppm (w/w).

The contents of each ingredient (i.e., the active ingredient and optionally the other ingredient) in the composition of the present invention can be set, for example, to obtain the amounts of each ingredient added in the method of the present invention described below.

Each ingredient (i.e., the active ingredient and optionally the other ingredient) contained in the composition of the present invention may be contained in the composition of the present invention as a mixture thereof, separately from each other, or separately in any combination thereof. For example, the composition of the present invention may be provided as a set of individual ingredients, each packaged separately. In such a case, the ingredients included in the set can be used together as appropriate at the time of use.

### <3> Method of the present invention

The method of the present invention is a method comprising the step of utilizing the active ingredient.

That is, the method of the present invention is a method comprising the step of utilizing the following ingredient (A):
(A) at least one type of ingredient selected from the group consisting of magnolol, propyl gallate, 2-methylbenzenethiol, E-β-damascenone, cinnamyl cinnamate, 2-thiophenethiol, 2-furfurylthiol, tetradecanal, sclareol, trans,trans-2,4-decadienal, nootkatone, piperine, trans,trans-2,4-nonadienal, and S-(2-methyl-3-furyl) ethanethioate.

By the method of the present invention, specifically by utilizing the active ingredient, p-cresol odor of a food can be suppressed, i.e., the masking effect can be obtained. Therefore, the method of the present invention may be implemented for suppressing p-cresol odor of a food. That is, the method of the present invention may be a method for suppressing p-cresol odor of a food. This method is also referred to as the "masking method of the present invention".

Further, by the method of the present invention, specifically by utilizing the active ingredient, a food of which p-cresol odor is suppressed can be produced. Therefore, the method of the present invention may be implemented for producing a food (specifically, producing a food of which p-cresol odor is suppressed). That is, the method of the present invention may be, for example, a method for producing a food (specifically, producing a food of which p-cresol odor is suppressed). This method is also referred to as the "food production method of the present invention".

The active ingredient can be used to suppress p-cresol odor or produce a food by adding it to a raw material of food during the production of the food. That is, examples of the utilization of the active ingredient include addition of the active ingredient to a raw material of food. That is, the method of the present invention may specifically be a method for suppressing p-cresol odor of a food, which comprises, for example, adding the active ingredient to a raw material of the food. The method of the present invention may also specifically be a method for producing a food (specifically, producing a food of which p-cresol odor is suppressed), which comprises, for example, adding the active ingredient to a raw material of the food. The "addition" is also referred to as "formulating".

The active ingredient may be utilized in the method of the present invention, for example, in the form of the composition of the present invention. In other words, the term "utilization of the active ingredient" encompasses utilization of the composition of the present invention. For example, the term "addition of the active ingredient" encompasses addition of the composition of the present invention.

The food obtained by the method of the present invention is also referred to as the "food of the present invention". The food of the present invention is specifically a food of which p-cresol odor has been suppressed. In other words, the food of the present invention is a food to which the active ingredient has been added.

The suppression of p-cresol odor or the production of the food may be conducted in the same manner as the production of ordinary foods, except for, for example, the utilization of the active ingredient. That is, the suppression of p-cresol odor or the production of the food may be conducted in the same manner as the production of ordinary foods by, for example,using the same raw materials and production conditions, except that, the active ingredient is utilized. In addition, any of the raw materials and production conditions of foods may be utilized with appropriate modifications for the suppression of p-cresol odor or the production of the food.

The food is not particularly limited so long as it is a food for which suppression of p-cresol odor is desired. The food may be a food already presenting p-cresol odor or a food that may present p-cresol odor in the future. Examples of the food already presenting p-cresol odor include foods containing p-cresol. Examples of the food that may present p-cresol odor in the future include foods containing an ingredient that can generate p-cresol. That is, the food may contain p-cresol and/or an ingredient that can generate p-cresol. p-Cresol can be generated from, for example, citral. That is, examples of the ingredient that can generate p-cresol include citral. Citral can decrease, for example, during heating or storage to generate p-cresol. Citral contained in the food may be, for example, a purified product of citral or a material containing citral. Examples of the material containing citral include citrus fruits such as lemon and mandarin, and herbs such as lemongrass. The citrus fruits may be, for example, the whole fruit or part of a fruit. Examples of the part of a fruit include juice, pulp, peel, and essential oil. Examples of the citrus fruits include, in particular, lemon juice. The herbs may be, for example, a whole plant body or a part of plant body. Examples of the part of plant body include an essential oil. Examples of the food include beverages. Examples of the food also include seasonings. The food may be, for example, a liquid or solid. Specific examples of the food include beverages such as soft drinks, alcoholic beverages, and soups; confectioneries such as jellies, ice cream, candies, cakes, tarts, mousses, bavarois, and gums; processed fruit products such as dried fruits; and seasonings such as dressings, sauces, lemon juice, ponzu (Japanese citrus fruit vinegar), and jams. The term "soft drinks" may mean non-alcoholic beverages (beverages having an alcohol concentration lower than 1%) excluding milk and dairy products. Specific examples of the soft drinks include water, fruit juices, vegetable juices, tea (black tea, etc.), coffee drinks (coffee, etc.), carbonated drinks, sports drinks, and jelly drinks. Specific examples of the soups include tom yam kung. Examples of the food include, in particular, the foods exemplified above, which contain p-cresol and/or an ingredient that can generate p-cresol. Examples of the food include, in more particular, the foods exemplified above, which have been produced by adding citral (e.g., purified citral or materials containing citral, such as lemon juice).

The form of the food at the time of being provided is not particularly limited. For example, the food may be provided in such a form that the food can be eaten (drunk) as it is, or in a form that requires preparation before or at the time of eating (drinking), such as concentrated or dried products. The food may also be provided in a form contained in any container, such as retort pouches, paper cartons, plastic bottles such as PET bottles, metal cans such as steel cans and aluminum cans, and glass bottles. The food is not limited to general foods, but may also be a so-called health food or medical food, such as nutritional supplements, functional foods, and foods for specified health uses. That is, for example, the foods exemplified above may be provided as general foods, or as health foods or medical foods.

The term "raw material of food" means a food material used to produce a food. The raw material of food is not particularly limited as long as it can be used to produce a food. The raw material of food can be selected according to various conditions, such as, for example, the type of food. Examples of the raw material of food include raw materials that can be normally used in the production of foods such as those exemplified above. Specific examples of the raw material of food include cereal products such as flour; seasoning ingredients such as sugars, inorganic salts, organic acids, nucleic acids, amino acids, and protein hydrolysates; dairy products such as milk, cheese, and butter; fruits; vegetables; eggs; spices; flavorings; oils and fats; alcohols; dietary fibers; and pH buffering agents.

The active ingredient may be added to the raw material of food at any stage of the production process of the food as long as the masking effect is obtained. In other words, the "raw material of food" to which the active ingredient is added may be at any stage of the food production process. For example, the term the "raw material of food" to which the active ingredient is added may encompass a finished food before the active ingredient is added. The active ingredient can be added to the raw material of food as it is or after it is prepared in a desired form, such as a solution, as appropriate. The term "addition of the active ingredient" can be used as a generic term to refer to any operation of making the active ingredient coexist with the raw material of food. The ingredient other than the active ingredient (e.g., p-cresol or ingredient that can generate p-cresol) may also be added to the raw material of food as appropriate. The description for the addition of the active ingredient may also be applied to the addition of ingredient other than the active ingredient. Each ingredient (i.e., the active ingredient and optionally the other ingredient) may all be added to the raw material of food at the same time, or each may be added separately, or separately in any combination thereof, to the raw material of food. The order of the addition of the ingredients to the raw material of food is not particularly limited.

The addition amounts and addition ratios of each ingredient (i.e., the active ingredient and optionally the other ingredient) in the method of the present invention are not particularly limited as long as the masking effect is obtained. The addition amounts and addition ratios of each ingredient used in the method of the present invention can be appropriately set according to various conditions, such as the type of the raw material of food and the type of the food.

The active ingredient may be added to the raw material of food, for example, so that the concentration of the active ingredient at the time of eating (drinking) is in a desired range (e.g., the range of the concentration of the active ingredient at the time of eating described below).

The concentration of the active ingredient at the time of eating may be, for example, 0.001 ppt (w/w) or higher, 0.002 ppt (w/w) or higher, 0.005 ppt (w/w) or higher, 0.01 ppt (w/w) or higher, 0.02 ppt (w/w) or higher, 0.05 ppt (w/w) or higher, 0.1 ppt (w/w) or higher, 0.2 ppt (w/w) or higher, 0.5 ppt (w/w) or higher, 1 ppt (w/w) or higher, 2 ppt (w/w) or higher, 5 ppt (w/w) or higher, 10 ppt (w/w) or higher, 20 ppt (w/w) or higher, 50 ppt (w/w) or higher, 100 ppt (w/w) or higher, 200 ppt (w/w) or higher, 500 ppt (w/w) or higher, 1 ppb (w/w) or higher, 2 ppb (w/w) or higher, 5 ppb (w/w) or higher, 10 ppb (w/w) or higher, 20 ppb (w/w) or higher, 50 ppb (w/w) or higher, 100 ppb (w/w) or higher, 200 ppb (w/w) or higher, 500 ppb (w/w) or higher, 1 ppm (w/w) or higher, 2 ppm (w/w) or higher, 5 ppm (w/w) or higher, 10 ppm (w/w) or higher, 20 ppm (w/w) or higher, 50 ppm (w/w) or higher, 100 ppm (w/w) or higher, 200 ppm (w/w) or higher, or 500 ppm (w/w) or higher, and may be 1000 ppm (w/w) or lower, 500 ppm (w/w) or lower, 200 ppm (w/w) or lower, 100 ppm (w/w) or lower, 50 ppm (w/w) or lower, 20 ppm (w/w) or lower, 10 ppm (w/w) or lower, 5 ppm (w/w) or lower, 2 ppm (w/w) or lower, 1 ppm (w/w) or lower, 500 ppb (w/w) or lower, 200 ppb (w/w) or lower, 100 ppb (w/w) or lower, 50 ppb (w/w) or lower, 20 ppb (w/w) or lower, 10 ppb (w/w) or lower, 5 ppb (w/w) or lower, 2 ppb (w/w) or lower, 1 ppb (w/w) or lower, 500 ppt (w/w) or lower, 200 ppt (w/w) or lower, 100 ppt (w/w) or lower, 50 ppt (w/w) or lower, 20 ppt (w/w) or lower, 10 ppt (w/w) or lower, 5 ppt (w/w) or lower, 2 ppt (w/w) or lower, 1 ppt (w/w) or lower, 0.5 ppt (w/w) or lower, 0.2 ppt (w/w) or lower, 0.1 ppt (w/w) or lower, 0.05 ppt (w/w) or lower, 0.02 ppt (w/w) or lower, 0.01 ppt (w/w) or lower, 0.005 ppt (w/w) or lower, or 0.002 ppt (w/w) or lower, or may be in a range defined by any non-contradictory combination of these exemplary minimum and maximum concentrations. The concentration of the active ingredient at the time of eating may specifically be, for example, 0.001 ppt (w/w) to 0.002 ppt (w/w), 0.002 ppt (w/w) to 0.005 ppt (w/w), 0.005 ppt (w/w) to 0.01 ppt (w/w), 0.01 ppt (w/w) to 0.02 ppt (w/w), 0.02 ppt (w/w) to 0.05 ppt (w/w), 0.05 ppt (w/w) to 0.1 ppt (w/w), 0.1 ppt (w/w) to 0.2 ppt (w/w), 0.2 ppt (w/w) to 0.5 ppt (w/w), 0.5 ppt (w/w) to 1 ppt (w/w), 1 ppt(w/w ) to 2 ppt (w/w), 2 ppt (w/w) to 5 ppt (w/w), 5 ppt (w/w) to 10 ppt (w/w), 10 ppt (w/w) to 20 ppt (w/w), 20 ppt (w/w) to 50 ppt (w/w), 50 ppt (w/w) to 100 ppt (w/w), 100 ppt (w/w) to 200 ppt (w/w), 200 ppt (w/w) to 500 ppt (w/w), 500 ppt (w/w) to 1 ppb (w/w), 1 ppb (w/w) to 2 ppb (w/w), 2 ppb (w/w) to 5 ppb (w/w), 5 ppb (w/w) to 10 ppb (w/w), 10 ppb (w/w) to 20 ppb (w/w), 20 ppb (w/w) to 50 ppb (w/w), 50 ppb (w/w) to 100 ppb (w/w), 100 ppb (w/w) to 200 ppb (w/w), 200 ppb (w/w) to 500 ppb (w/w), 500 ppb (w/w) to 1 ppm (w/w), 1 ppm (w/w) to 2 ppm (w/w), 2 ppm (w/w) to 5 ppm (w/w), 5 ppm (w/w) to 10 ppm (w/w), 10 ppm (w/w) to 20 ppm (w/w), 20 ppm (w/w) to 50 ppm (w/w), 50 ppm (w/w) to 100 ppm (w/w), 100 ppm (w/w) to 200 ppm (w/w), 200 ppm (w/w) to 500 ppm (w/w), or 500 ppm (w/w) to 1000 ppm (w/w),. The concentration of the active ingredient at the time of eating may specifically be, for example, 0.001 ppt (w/w) to 1000 ppm (w/w), 0.01 ppt (w/w) to 100 ppm (w/w), 0.1 ppt (w/w) to 100 ppm (w/w), 0.1 ppt (w/w) to 50 ppm (w/w), 0.1 ppt (w/w) to 20 ppm (w/w), or 0.1 ppt (w/w) to 10 ppm (w/w).

The concentration of 2-thiophenethiol at the time of eating may be, for example, in the range of the concentration of the active ingredient at the time of eating exemplified above. The concentration of 2-thiophenethiol at the time of eating may also be, for example, 0.001 ppt (w/w) or higher, 0.002 ppt (w/w) or higher, 0.005 ppt (w/w) or higher, 0.01 ppt (w/w) or higher, 0.02 ppt (w/w) or higher, 0.05 ppt (w/w) or higher, 0.1 ppt (w/w) or higher, 0.2 ppt (w/w) or higher, 0.5 ppt (w/w) or higher, 1 ppt (w/w) or higher, 2 ppt (w/w) or higher, 5 ppt (w/w) or higher, 10 ppt (w/w) or higher, 20 ppt (w/w) or higher, 50 ppt (w/w) or higher, 100 ppt (w/w) or higher, 200 ppt (w/w) or higher, or 500 ppt (w/w) or higher, and may be 1 ppb (w/w) or lower, 500 ppt (w/w) or lower, 200 ppt (w/w) or lower, 100 ppt (w/w) or lower, 50 ppt (w/w) or lower, 20 ppt (w/w) or lower, 10 ppt (w/w) or lower, 5 ppt (w/w) or lower, 2 ppt (w/w) or lower, 1 ppt (w/w) or lower, 0.5 ppt (w/w) or lower, 0.2 ppt (w/w) or lower, 0.1 ppt (w/w) or lower, 0.05 ppt (w/w) or lower, 0.02 ppt (w/w) or lower, 0.01 ppt (w/w) or lower, 0.005 ppt (w/w) or lower, or 0.002 ppt (w/w) or lower, or may be in a range defined by any non-contradictory combination of these exemplary minimum and maximum concentrations. The concentration of 2-thiophenethiol at the time of eating may specifically be, for example, 0.001 ppt (w/w) to 1 ppb (w/w), 0.01 ppt (w/w) to 100 ppt (w/w), or 0.1 ppt (w/w) to 10 ppt (w/w).

The concentration of E-β-damascenone, 2-furfurylthiol, or S-(2-methyl-3-furyl) ethanethioate at the time of eating may be, for example, in the range of the concentration of the active ingredient at the time of eating exemplified above. The concentration of E-β-damascenone, 2-furfurylthiol, or S-(2-methyl-3-furyl) ethanethioate at the time of eating may also be, for example, 0.01 ppt (w/w) or higher, 0.02 ppt (w/w) or higher, 0.05 ppt (w/w) or higher, 0.1 ppt (w/w) or higher, 0.2 ppt (w/w) or higher, 0.5 ppt (w/w) or higher, 1 ppt (w/w) or higher, 2 ppt (w/w) or higher, 5 ppt (w/w) or higher, 10 ppt (w/w) or higher, 20 ppt (w/w) or higher, 50 ppt (w/w) or higher, 100 ppt (w/w) or higher, 200 ppt (w/w) or higher, 500 ppt (w/w) or higher, 1 ppb (w/w) or higher, 2 ppb (w/w) or higher, or 5 ppb (w/w) or higher, and may be 1 ppm (w/w) or lower, 500 ppb (w/w) or lower, 200 ppb (w/w) or lower, 100 ppb (w/w) or lower, 50 ppb (w/w) or lower, 20 ppb (w/w) or lower, 10 ppb (w/w) or lower, 5 ppb (w/w) or lower, 2 ppb (w/w) or lower, 1 ppb (w/w) or lower, 500 ppt (w/w) or lower, 200 ppt (w/w) or lower, 100 ppt (w/w) or lower, 50 ppt (w/w) or lower, 20 ppt (w/w) or lower, 10 ppt (w/w) or lower, 5 ppt (w/w) or lower, 2 ppt (w/w) or lower, 1 ppt (w/w) or lower, 0.5 ppt (w/w) or lower, 0.2 ppt (w/w) or lower, 0.1 ppt (w/w) or lower, 0.05 ppt (w/w) or lower, or 0.02 ppt (w/w) or lower, or may be in a range defined by any non-contradictory combination of these exemplary minimum and maximum concentrations. The concentration of E-β-damascenone, 2-furfurylthiol, or S-(2-methyl-3-furyl) ethanethioate at the time of eating may specifically be, for example, 0.01 ppt (w/w) to 1 ppm (w/w), 0.1 ppt (w/w) to 1 ppm (w/w), 1 ppt (w/w) to 1 ppm (w/w), 0.01 ppt (w/w) to 10 ppb (w/w), 0.1 ppt (w/w) to 1 ppb (w/w), or 1 ppt (w/w) to 100 ppt (w/w).

The concentration of 2-methylbenzenethiol, cinnamyl cinnamate, trans,trans-2,4-decadienal, or trans,trans-2,4-nonadienal at the time of eating may be, for example, in the range of the concentration of the active ingredient at the time of eating exemplified above. The concentration of 2-methylbenzenethiol, cinnamyl cinnamate, trans,trans-2,4-decadienal, or trans,trans-2,4-nonadienal at the time of eating may also be, for example, 0.1 ppt (w/w) or higher, 0.2 ppt (w/w) or higher, 0.5 ppt (w/w) or higher, 1 ppt (w/w) or higher, 2 ppt (w/w) or higher, 5 ppt (w/w) or higher, 10 ppt (w/w) or higher, 20 ppt (w/w) or higher, 50 ppt (w/w) or higher, 100 ppt (w/w) or higher, 200 ppt (w/w) or higher, 500 ppt (w/w) or higher, 1 ppb (w/w) or higher, 2 ppb (w/w) or higher, 5 ppb (w/w) or higher, 10 ppb (w/w) or higher, 20 ppb (w/w) or higher, 50 ppb (w/w) or higher, 100 ppb (w/w) or higher, 200 ppb (w/w) or higher, or 500 ppb (w/w) or higher, and may be 1 ppm (w/w) or lower, 500 ppb (w/w) or lower, 200 ppb (w/w) or lower, 100 ppb (w/w) or lower, 50 ppb (w/w) or lower, 20 ppb (w/w) or lower, 10 ppb (w/w) or lower, 5 ppb (w/w) or lower, 2 ppb (w/w) or lower, 1 ppb (w/w) or lower, 500 ppt (w/w) or lower, 200 ppt (w/w) or lower, 100 ppt (w/w) or lower, 50 ppt (w/w) or lower, 20 ppt (w/w) or lower, 10 ppt (w/w) or lower, 5 ppt (w/w) or lower, 2 ppt (w/w) or lower, 1 ppt (w/w) or lower, 0.5 ppt (w/w) or lower, or 0.2 ppt (w/w) or lower, or may be in a range defined by any non-contradictory combination of these exemplary minimum and maximum concentrations. The concentration of 2-methylbenzenethiol, cinnamyl cinnamate, trans,trans-2,4-decadienal, or trans,trans-2,4-nonadienal at the time of eating may specifically be, for example, 0.1 ppt (w/w) to 1 ppm (w/w), 1 ppt (w/w) to 1 ppm (w/w), 10 ppt (w/w) to 1 ppm (w/w), 0.1 ppt (w/w) to 100 ppb (w/w), 1 ppt (w/w) to 10 ppb (w/w), or 10 ppt (w/w) to 1 ppb (w/w).

The concentration of magnolol, propyl gallate, or tetradecanal at the time of eating may be, for example, in the range of the concentration of the active ingredient at the time of eating exemplified above. The concentration of magnolol, propyl gallate, or tetradecanal at the time of eating may also be, for example, 10 ppt (w/w) or higher, 20 ppt (w/w) or higher, 50 ppt (w/w) or higher, 100 ppt (w/w) or higher, 200 ppt (w/w) or higher, 500 ppt (w/w) or higher, 1 ppb (w/w) or higher, 2 ppb (w/w) or higher, 5 ppb (w/w) or higher, 10 ppb (w/w) or higher, 20 ppb (w/w) or higher, 50 ppb (w/w) or higher, 100 ppb (w/w) or higher, 200 ppb (w/w) or higher, 500 ppb (w/w) or higher, 1 ppm (w/w) or higher, 2 ppm (w/w) or higher, or 5 ppm (w/w) or higher, and may be 10 ppm (w/w) or lower, 5 ppm (w/w) or lower, 2 ppm (w/w) or lower, 1 ppm (w/w) or lower, 500 ppb (w/w) or lower, 200 ppb (w/w) or lower, 100 ppb (w/w) or lower, 50 ppb (w/w) or lower, 20 ppb (w/w) or lower, 10 ppb (w/w) or lower, 5 ppb (w/w) or lower, 2 ppb (w/w) or lower, 1 ppb (w/w) or lower, 500 ppt (w/w) or lower, 200 ppt (w/w) or lower, 100 ppt (w/w) or lower, 50 ppt (w/w) or lower, or 20 ppt (w/w) or lower, or may be in a range defined by any non-contradictory combination of these exemplary minimum and maximum concentrations. The concentration of magnolol, propyl gallate, or tetradecanal at the time of eating may specifically be, for example, 10 ppt (w/w) to 10 ppm (w/w), 100 ppt (w/w) to 1 ppm (w/w), or 1 ppb (w/w) to 100 ppb (w/w).

The concentration of sclareol or nootkatone at the time of eating may be, for example, in the range of the concentration of the active ingredient at the time of eating exemplified above. The concentration of sclareol or nootkatone at the time of eating may also be, for example, 100 ppt (w/w) or higher, 200 ppt (w/w) or higher, 500 ppt (w/w) or higher, 1 ppb (w/w) or higher, 2 ppb (w/w) or higher, 5 ppb (w/w) or higher, 10 ppb (w/w) or higher, 20 ppb (w/w) or higher, 50 ppb (w/w) or higher, 100 ppb (w/w) or higher, 200 ppb (w/w) or higher, 500 ppb (w/w) or higher, 1 ppm (w/w) or higher, 2 ppm (w/w) or higher, 5 ppm (w/w) or higher, 10 ppm (w/w) or higher, 20 ppm (w/w) or higher, or 50 ppm (w/w) or higher, and may be 100 ppm (w/w) or lower, 50 ppm (w/w) or lower, 20 ppm (w/w) or lower, 10 ppm (w/w) or lower, 5 ppm (w/w) or lower, 2 ppm (w/w) or lower, 1 ppm (w/w) or lower, 500 ppb (w/w) or lower, 200 ppb (w/w) or lower, 100 ppb (w/w) or lower, 50 ppb (w/w) or lower, 20 ppb (w/w) or lower, 10 ppb (w/w) or lower, 5 ppb (w/w) or lower, 2 ppb (w/w) or lower, 1 ppb (w/w) or lower, 500 ppt (w/w) or lower, or 200 ppt (w/w) or lower, or may be in a range defined by any non-contradictory combination of these exemplary minimum and maximum concentrations. The concentration of sclareol or nootkatone at the time of eating may specifically be, for example, 0.1 ppb (w/w) to 100 ppm (w/w), 1 ppb (w/w) to 100 ppm (w/w), 10 ppb (w/w) to 100 ppm (w/w), 1 ppb (w/w) to 10 ppm (w/w), or 10 ppb (w/w) to 1 ppm (w/w).

The concentration of piperine at the time of eating may be, for example, in the range of the concentrations of the active ingredient at the time of eating exemplified above. The concentration of piperine at the time of eating may also be, for example, 1 ppb (w/w) or higher, 2 ppb (w/w) or higher, 5 ppb (w/w) or higher, 10 ppb (w/w) or higher, 20 ppb (w/w) or higher, 50 ppb (w/w) or higher, 100 ppb (w/w) or higher, 200 ppb (w/w) or higher, 500 ppb (w/w) or higher, 1 ppm (w/w) or higher, 2 ppm (w/w) or higher, 5 ppm (w/w) or higher, 10 ppm (w/w) or higher, 20 ppm (w/w) or higher, 50 ppm (w/w) or higher, 100 ppm (w/w) or higher, 200 ppm (w/w) or higher, or 500 ppm (w/w) or higher, and may be 1000 ppm (w/w) or lower, 500 ppm (w/w) or lower, 200 ppm (w/w) or lower, 100 ppm (w/w) or lower, 50 ppm (w/w) or lower, 20 ppm (w/w) or lower, 10 ppm (w/w) or lower, 5 ppm (w/w) or lower, 2 ppm (w/w) or lower, 1 ppm (w/w) or lower, 500 ppb (w/w) or lower, 200 ppb (w/w) or lower, 100 ppb (w/w) or lower, 50 ppb (w/w) or lower, 20 ppb (w/w) or lower, 10 ppb (w/w) or lower, 5 ppb (w/w) or lower, or 2 ppb (w/w) or lower, or may be in a range defined by any non-contradictory combination of these exemplary minimum and maximum concentrations. The concentration of piperine at the time of eating may specifically be, for example, 1 ppb (w/w) to 1000 ppm (w/w), 10 ppb (w/w) to 100 ppm (w/w), or 100 ppb (w/w) to 10 ppm (w/w).

The concentration of the active ingredient at the time of eating may also be, for example, lower than the threshold concentration of the active ingredient. The concentration of the active ingredient at the time of eating may specifically be, for example, in the range of the concentration of the active ingredient at the time of eating exemplified above, and lower than the threshold concentration of the active ingredient. The term "threshold concentration of the active ingredient" means the maximum concentration of the active ingredient at which odor of the active ingredient itself is not felt when an aqueous solution containing the active ingredient alone is ingested. Examples of the threshold concentration of the active ingredient include the threshold concentrations described in the examples.

The description for the addition of the active ingredient can be applied to the addition of the composition of the present invention. For example, the composition of the present invention can be added so that the addition amount of the active ingredient exemplified above can be attained.

The ingredient other than the active ingredient may be added to a raw material of food so that, for example, the concentration of the ingredient other than the active ingredient at the time of eating should be in a desired range (e.g., the range shown below). When cinnamaldehyde is used in combination with the active ingredient, the concentration of cinnamaldehyde at the time of eating may be, for example, in the range of the concentrations of the active ingredient at the time of eating exemplified above.

The food of the present invention may contain an ingredient that can generate p-cresol (e.g., citral). That is, the food of the present invention may be produced to contain an ingredient that can generate p-cresol. Such a food containing an ingredient that can generate p-cresol can be produced by, for example, adding an ingredient that can generate p-cresol. That is, the method of the present invention may further comprise adding an ingredient that can generate p-cresol to a raw material of food. Such a food containing an ingredient that can generate p-cresol may be produced by, for example, adding an ingredient that can generate p-cresol itself, or by adding a material containing an ingredient that can generate p-cresol. As the ingredient that can generate p-cresol, a commercial product may be used, or such an ingredient appropriately produced and obtained may be used. The method for producing the ingredient that can generate p-cresol is not particularly limited. The ingredient that can generate p-cresol can be produced by, for example, chemical synthesis, enzymatic reaction, fermentation, extraction, or a combination thereof. The addition of the ingredient that can generate p-cresol can be carried out in the same manner as the addition of the active ingredient. The ingredient that can generate p-cresol may be added to a raw material of food, for example, so that the content of the ingredient that can generate p-cresol in the food of the present invention is in a desired range (e.g., the range of the content described below). The food containing the ingredient that can generate p-cresol can also be produced by, for example, using a raw material of food containing the ingredient that can generate p-cresol. That is, the raw material of food may contain the ingredient that can generate p-cresol.

When the ingredient that can generate p-cresol can form a salt, the ingredient that can generate p-cresol may be used as a free form, a salt, or a combination thereof. That is, the term "ingredient that can generate p-cresol" may mean an ingredient that can generate p-cresol in the form of free form or a salt thereof, or a combination thereof, unless otherwise noted. The term "free form" means a form that does not form a salt. If the ingredient that can generate p-cresol can form a hydrate, the ingredient that can generate p-cresol may be used as anhydrate, hydrate, or a combination thereof. That is, the term "ingredient that can generate p-cresol" (e.g., "the ingredient that can generate p-cresol in the form of free form" or "salt of the ingredient that can generate p-cresol") may encompass anhydrate and hydrate, unless otherwise noted. The ingredient that can generate p-cresol may be in any form, such as in the form of ion, at the time of use.

The salt is not particularly limited as long as it can be orally ingested. For example, specific examples of salt for acidic group such as carboxyl group include ammonium salts, salts with alkali metals such as sodium and potassium, salts with alkaline earth metals such as calcium and magnesium, aluminum salts, zinc salts, salts with organic amines such as triethylamine, ethanolamine, morpholine, pyrrolidine, piperidine, piperazine, and dicyclohexylamine, and salts with basic amino acids such as arginine and lysine. Specific examples of salt for basic group such as amino group include salts with inorganic acids such as hydrochloric acid, sulfuric acid, phosphoric acid, nitric acid, and hydrobromic acid, salts with organic carboxylic acids such as acetic acid, citric acid, benzoic acid, maleic acid, fumaric acid, tartaric acid, succinic acid, tannic acid, butyric acid, hibenzic acid, pamoic acid, enanthic acid, decanoic acid, theoclic acid, salicylic acid, lactic acid, oxalic acid, mandelic acid, malic acid, methylmalonic acid, and adipic acid, and salts with organic sulfonic acids such as methanesulfonic acid, benzenesulfonic acid, and p-toluenesulfonic acid. As the salt, one type of salt may be used, or a combination of two or more types of salts may be used.

When a material containing the ingredient that can generate p-cresol is used, the amount (e.g., content (concentration) or amount used) of the ingredient that can generate p-cresol shall be calculated on the basis of the amount of the ingredient that can generate p-cresol itself contained in the material. When the ingredient that can generate p-cresol forms a salt or hydrate, the amount (e.g., content (concentration) or amount used) of the ingredient that can generate p-cresol shall be calculated on the basis of the mass of equimolar amount of unhydrated free form corresponding to the salt or hydrate. The same shall apply to p-cresol.

When the food of the present invention contains the ingredient that can generate p-cresol (e.g., citral), the content of the ingredient that can generate p-cresol in the food of the present invention is, as the concentration at the time of eating, for example, 100 ppb (w/w) or higher, 200 ppb (w/w) or higher, 500 ppb (w/w) or higher, 1 ppm (w/w) or higher, 2 ppm (w/w) or higher, 5 ppm (w/w) or higher, 10 ppm (w/w) or higher, 20 ppm (w/w) or higher, 50 ppm (w/w) or higher, 100 ppm (w/w) or higher, 200 ppm (w/w) or higher, or 500 ppm (w/w) or higher, and may be 1000 ppm (w/w) or lower, 500 ppm (w/w) or lower, 200 ppm (w/w) or lower, 100 ppm (w/w) or lower, 50 ppm (w/w) or lower, 20 ppm (w/w) or lower, 10 ppm (w/w) or lower, 5 ppm (w/w) or lower, 2 ppm (w/w) or lower, 1 ppm (w/w) or lower, 500 ppb (w/w) or lower, or 200 ppb (w/w) or lower, or may be in a range defined by any non-contradictory combination of these exemplary minimum and maximum concentrations. The content of the ingredient that can generate p-cresol (e.g., citral) in the food of the present invention may specifically be, as the concentration at the time of eating, for example, 100 ppb (w/w) to 200 ppb (w/w), 200 ppb (w/w) to 500 ppb (w/w), 500 ppb (w/w) to 1 ppm (w/w), 1 ppm (w/w) to 2 ppm (w/w), 2 ppm (w/w) to 5 ppm (w/w), 5 ppm (w/w) to 10 ppm (w/w), 10 ppm (w/w) to 20 ppm (w/w), 20 ppm (w/w) to 50 ppm (w/w), 50 ppm (w/w) to 100 ppm (w/w), 100 ppm (w/w) to 200 ppm (w/w), 200 ppm (w/w) to 500 ppm (w/w), or 500 ppm (w/w) to 1000 ppm (w/w). The content of the ingredient that can generate p-cresol (e.g., citral) in the food of the present invention may specifically be, as the concentration at the time of eating, for example, 100 ppb (w/w) to 1000 ppm (w/w). In addition, in one embodiment, the content of the ingredient that can generate p-cresol in the food of the present invention exemplified above may be read as the total of the content of the ingredient that can generate p-cresol and the content of p-cresol in the food of the present invention.

The food of the present invention may contain p-cresol. That is, the food of the present invention may be produced to contain p-cresol. Such a food containing p-cresol may be produced by, for example, adding p-cresol. That is, the method of the present invention may further comprise adding p-cresol to a raw material of food. The food containing p-cresol may be produced by, for example, adding p-cresol itself, or adding a material containing p-cresol, such as seasonings containing p-cresol. As p-cresol, a commercially available product may be used, or one appropriately produced and obtained may be used. The method for producing p-cresol is not particularly limited. p-Cresol may be produced by chemical synthesis, enzymatic reaction, fermentation, extraction, or a combination thereof. The addition of p-cresol can be carried out in the same manner as the addition of the active ingredient. p-Cresol can be added to a raw material of food so that, for example, the content of p-cresol in the food of the present invention is within a desired range (e.g., the content range described below). The food containing p-cresol can also be produced by, for example, using a raw material of food containing p-cresol. That is, the raw material of food may contain p-cresol. p-Cresol may also be generated, for example, in the production process of the food of the present invention. p-Cresol may be generated by, for example, heating an ingredient that can generate p-cresol. Therefore, the method of the present invention may comprise, for example, the step of heating a raw material of food or food containing an ingredient that can generate p-cresol. The heating may be carried out before or after the addition of the active ingredient. p-Cresol may also be generated, for example, after the production process of the food of the present invention is performed (e.g., during storage of the food of the present invention).

Conditions for the heating are not particularly limited as long as p-cresol is generated. The heating temperature may be, for example, 50°C or higher, 60°C or higher, 70°C or higher, 80°C or higher, 90°C or higher, or 100°C or higher, and may be 200°C or lower, 150°C or lower, 120°C or lower, 100°C or lower, 90°C or lower, or 80°C or lower, or may be in a range defined by any non-contradictory combination of these exemplary minimum and maximum temperatures. The heating temperature may specifically be, for example, 50 to 200°C or 80 to 150°C. The heating time may be, for example, 1 minute or longer, 3 minutes or longer, 5 minutes or longer, 10 minutes or longer, 15 minutes or longer, 20 minutes or longer, 30 minutes or longer, or 60 minutes or longer, and 120 minutes or shorter, 90 minutes or shorter, 60 minutes or shorter, or 30 minutes or shorter, or may be in a range defined by any non-contradictory combination of these exemplary minimum and maximum durations. The heating time may specifically be, for example, 1 to 120 minutes, 10 to 90 minutes, or 30 to 60 minutes. Examples of the heating method include incubating, baking, steaming, boiling, and frying. The heating may be carried out, for example, in conjunction with carrying out the food production process, or separately from the food production process. Further, for example, a part of the heating may be carried out in conjunction with carrying out the food production process and the remainder may be carried out separately from the food production process. For example, if the production process of the food inherently comprises a heating step, the production process of the food may also serve as a part or all of the heating.

When the food of the present invention contains p-cresol, the content of p-cresol in the food of the present invention may be, as the concentration at the time of eating, for example, 1 ppb (w/w) or higher, 2 ppb (w/w) or higher, 5 ppb (w/w) or higher, 10 ppb (w/w) or higher, 20 ppb (w/w) or higher, 50 ppb (w/w) or higher, 100 ppb (w/w) or higher, 200 ppb (w/w) or higher, 500 ppb (w/w) or higher, 1 ppm (w/w) or higher, 2 ppm (w/w) or higher, 5 ppm (w/w) or higher, 10 ppm (w/w) or higher, 20 ppm (w/w) or higher, or 50 ppm (w/w) or higher, and may be 100 ppm (w/w) or lower, 50 ppm (w/w) or lower, 20 ppm (w/w) or lower, 10 ppm (w/w) or lower, 5 ppm (w/w) or lower, 2 ppm (w/w) or lower, 1 ppm (w/w) or lower, 500 ppb (w/w) or lower, 200 ppb (w/w) or lower, 100 ppb (w/w) or lower, 50 ppb (w/w) or lower, 20 ppb (w/w) or lower, 10 ppb (w/w) or lower, 5 ppb (w/w) or lower, or 2 ppb (w/w) or lower, or may be in a range defined by any non-contradictory combination of these exemplary minimum and maximum contents. The content of p-cresol in the food of the present invention may specifically be, as the concentration at the time of eating, for example, 1 ppb (w/w) to 2 ppb (w/w), 2 ppb (w/w) to 5 ppb (w/w), 5 ppb (w/w) to 10 ppb (w/w), 10 ppb (w/w) to 20 ppb (w/w), 20 ppb (w/w) to 50 ppb (w/w), 50 ppb (w/w) to 100 ppb (w/w), 100 ppb (w/w) to 200 ppb (w/w), 200 ppb (w/w) to 500 ppb (w/w), 500 ppb (w/w) to 1 ppm (w/w), 1 ppm (w/w) to 2 ppm (w/w), 2 ppm (w/w) to 5 ppm (w/w), 5 ppm (w/w) to 10 ppm (w/w), 10 ppm (w/w) to 20 ppm (w/w), 20 ppm (w/w) to 50 ppm (w/w), or 50 ppm (w/w) to 100 ppm (w/w). The content of p-cresol in the food of the present invention may specifically be, as the concentration at the time of eating, for example, 1 ppb (w/w) to 100 ppm (w/w), 10 ppb (w/w) to 10 ppm (w/w), or 50 ppb (w/w) to 2 ppm (w/w).

### <4> Use of active ingredient

The present invention also discloses to use of the active ingredient for the purposes exemplified above. That is, the present invention discloses to, for example, use of the active ingredient for suppressing p-cresol odor of a food or for producing a food, or use of the active ingredient for producing a composition for suppressing p-cresol odor of a food or production of a food.

The present invention also discloses to the active ingredient for use for the purposes exemplified above. That is, the present invention discloses to, for example, the active ingredient for use in suppression of p-cresol odor of a food or for producing a food, and the active ingredient for use in production of a composition for suppressing p-cresol odor of a food or for producing a food.

### EXAMPLES

Hereafter, the present invention will be explained in more detail with reference to non-limiting examples.

Unless otherwise noted, the raw materials, reagents, compounds and so forth used in the examples are readily obtained or prepared according to methods normally practiced in the art, or commercially available.

### Example: Evaluation of p-cresol odor-masking effect

In this example, various compounds were evaluated for p-cresol odor-masking effect.

### [Test Example 1]

### (Preparation of evaluation samples)

Each of the compounds shown in Table 1 was added to a 4 ppm p-cresol aqueous solution to prepare each evaluation sample. The concentration of each compound added was the concentration at which odor of the compound itself is not felt when the aqueous solution containing the compound alone is put into the mouth and swallowed (threshold concentration).

### (Evaluation of p-cresol odor-masking effect)

The p-cresol odor intensity of each evaluation sample was evaluated by putting 5 ml of the sample into the mouth and naturally swallowing it. The p-cresol odor intensity was scored as 0 to 5 on the basis of the following evaluation criteria using p-cresol aqueous solutions prepared at 4 ppm, 2 ppm, or 0 ppm as the standards. The evaluation was performed by a panel of 3 experts, and an average value of the results was calculated for each evaluation sample. On the basis of the p-cresol odor intensity, the p-cresol odor-masking effect was evaluated.

### [Evaluation criteria for p-cresol odor intensity]

0: p-Cresol odor intensity of 0 ppm p-cresol aqueous solution (water not containing p-cresol)
3: p-Cresol odor intensity of 2 ppm p-cresol aqueous solution
5: p-Cresol odor intensity of 4 ppm p-cresol aqueous solution

### [Evaluation criteria for p-cresol odor-masking effect]

-: p-Cresol odor intensity not lower than 5.2
±: p-Cresol odor intensity not lower than 4.8 and lower than 5.2
+: p-Cresol odor intensity not lower than 4.0 and lower than 4.8
++: p-Cresol odor intensity not lower than 3 and lower than 4
+++: p-Cresol odor intensity lower than 3 (intensity equivalent to that of 2 ppm p-cresol aqueous solution)

The results are shown in Table 1. All of the evaluated compounds exhibited p-cresol odor-masking effect.

Separately, p-cresol odor-masking effect of each of the compounds shown in Table 1 was also confirmed by using a commercial lemon juice-containing beverage that was degraded to present p-cresol odor (data not shown).

**[Table 1]**

| Compound | Addition amount | Relative concentration based on threshold concentration | Masking effect |
|---|---|---|---|
| Magnolol | 10ppb | Threshold | ++ |
| Propyl gallate | 10ppb | Threshold | + |
| 2-Methylbenzenethiol | 100ppt | Threshold | ++ |
| E-β-Damascenone | 10ppt | Threshold | + |
| Cinnamyl cinnamate | 100ppt | Threshold | ++ |
| 2-Thiophenethiol | 1ppt | Threshold | ++ |
| 2-Furfurylthiol | 10ppt | Threshold | + |
| Tetradecanal | 10ppb | Threshold | + |
| Sclareol | 100ppb | Threshold | ++ |
| trans,trans-2,4-Decadienal | 100ppt | Threshold | ++ |
| Nootkatone | 100ppb | Threshold | ++ |
| Piperine | 1ppm | Threshold | + |
| trans,trans-2,4-Nonadienal | 100ppt | Threshold | + |
| S-(2-Methyl-3-furyl) ethanethioate | 10ppt | Threshold | ++ |

### [Test Example 2]

### (Preparation of evaluation samples)

Evaluation samples were prepared by adding each of the compounds shown in Table 2 to a 4 ppm p-cresol aqueous solution. The concentration of each compound added was set at 1/10 of the threshold concentration, threshold concentration, or 10 times of the threshold concentration. The threshold concentration is the concentration at which odor of the compound itself is not felt when an aqueous solution containing each compound alone is put into the mouth and swallowed.

### (Evaluation of p-cresol odor-masking effect)

The p-cresol odor intensity of each evaluation sample was evaluated by putting 5 ml of the sample into the mouth and naturally swallowing it. The p-cresol odor intensity was scored as 0 to 5 on the basis of the following evaluation criteria using 4 ppm, 2 ppm, and 0 ppm p-cresol aqueous solutions as the standards. The evaluation was performed by a panel of 6 experts, and an average value of the results was calculated for each evaluation sample. The p-cresol odor-masking effect was evaluated on the basis of p-cresol odor intensity.

### [Evaluation criteria for p-cresol odor intensity]

0: p-Cresol odor intensity of 0 ppm p-cresol aqueous solution (water not containing p-cresol)
3: p-Cresol odor intensity of 2 ppm p-cresol aqueous solution
5: p-Cresol odor intensity of 4 ppm p-cresol aqueous solution

### [Evaluation criteria for p-cresol odor-masking effect]

-: p-Cresol odor intensity not lower than 5.2
±: p-Cresol odor intensity not lower than 4.8 and lower than 5.2
+: p-Cresol odor intensity not lower than 4.0 and lower than 4.8
++: p-Cresol odor intensity not lower than 3 and lower than 4
+++: p-Cresol odor intensity lower than 3 (intensity equivalent to 2 ppm p-cresol aqueous solution)

The results are shown in Table 2. The evaluated compounds showed p-cresol odor-masking effects at all the addition concentrations.

### [Table 2]

**Table 2**

| Compound | Addition amount | Relative concentration based on threshold concentration | Masking effect |
|---|---|---|---|
| Nootkatone | 10ppb | 1/10 Of threshold | ++ |
| | 100ppb | Threshold | ++ |
| | 1ppm | 10 Times of threshold | ++ |
| Sclareol | 10ppb | 1/10 Of threshold | ++ |
| | 100ppb | Threshold | ++ |
| | 1ppm | 10 Times of threshold | ++ |
| trans,trans-2,4-Decadienal | 10ppt | 1/10 of threshold | +++ |
| | 100ppt | Threshold | ++ |
| | 1ppb | 10 Times of threshold | ++ |
| Piperine | 100ppb | 1/10 Of threshold | ++ |
| | 1ppm | Threshold | + |
| | 10ppm | 10 Times of threshold | + |
| trans,trans-2,4-Nonadienal | 10ppt | 1/10 Of threshold | ++ |
| | 100ppt | Threshold | + |
| | 1ppb | 10 Times of threshold | + |
| S-(2-Methyl-3-furyl) ethanethioate | 1ppt | 1/10 Of threshold | + |
| | 10ppt | Threshold | ++ |
| | 100ppt | 10 Times of threshold | ++ |
| Cinnamyl cinnamate | 10ppt | 1/10 Of threshold | ++ |
| | 100ppt | Threshold | ++ |
| | 1ppb | 10 Times of threshold | ++ |
| 2-Thiophenethiol | 0.1ppt | 1/10 Of threshold | ++ |
| | 1ppt | Threshold | ++ |
| | 10ppt | 10 Times of threshold | + |

### [Test Example 3]

### (Preparation of evaluation samples)

A 100 ppm citral aqueous solution (stored under refrigeration after preparation) was used as a normal sample. This solution was stored at 44°C for two weeks to generate a degraded odor derived from citral, and was used as a degraded sample. Evaluation samples were prepared by adding each of the compounds shown in Table 3 to the degraded sample at the concentrations shown in the same.

### (Evaluation of citral-derived degradation odor-masking effect)

The intensity of the citral-derived degradation odor of each evaluation sample was evaluated by putting 5 ml of the sample into the mouth and naturally swallowing it. The citral-derived degradation odor intensity was scored as 0 to 10 on the basis of the following evaluation criteria. The evaluation was performed by a panel of 2 experts, and an average value of the results was calculated for each evaluation sample. On the basis of the intensity of the citral-derived degradation odor, the citral-derived degradation odor-masking effect was evaluated.

### [Evaluation criteria for citral-derived degradation odor intensity]

0: Citral-derived degradation odor intensity of the normal sample
5: Citral-derived degradation odor intensity of a mixture of the normal sample and degraded sample (normal sample degraded sample = 1: 1)
10: Citral-derived degradation odor intensity of the degraded sample

The results are shown in Table 3. All of the evaluated compounds showed citral-derived degradation odor masking effect.

### [Table 3]

**Table 3**

| Compound | Concentration of addition (ppm) | Evaluation score | Comment |
|---|---|---|---|
| trans,trans-2,4-Decadienal | 0.002 | 5 | Initial and middle degradation odors were suppressed. |
| trans,trans-2,4-Nonadienal | 0.002 | 7 | Initial and middle degradation odors were suppressed. |
| 2-Methylbenzenethiol | 0.165 | 8 | Initial, middle and after degradation odors were suppressed. |
| S-(2-Methyl-3-furyl) ethanethioate | 0.120 | 6 | Initial and middle degradation odors and middle and after browning odors were suppressed. |
| Piperine | 6.667 | 6 | Initial and middle degradation odors were suppressed. |
| Nootkatone | 10.000 | 5.5 | Initial, middle and after degradation odors were suppressed. |
| Sclareol | 16.667 | 5.5 | Initial, middle and after degradation odors were suppressed. |

### [Test Example 4]

### (Preparation of evaluation samples)

A commercially available lemon beverage (Chelate Lemon W Lemon (Pokka Sapporo), stored under refrigeration after purchased) was used as a normal sample. This lemon beverage was stored at 44°C for 2 weeks to generate a lemon-derived degradation odor and was used as a degraded sample. Evaluation samples were prepared by adding each of the compounds shown in Table 4 to the degraded sample at the concentrations shown in the same.

### (Evaluation of lemon-derived degradation odor-masking effect)

The lemon-derived degradation odor intensity of each evaluation sample was evaluated by putting 5 ml of the sample into the mouth and naturally swallowing it. The intensity of the lemon-derived degradation odor was scored as 0 to 10 on the basis of the following evaluation criteria. The evaluation was performed by a panel of 2 experts, and an average value of the results was calculated for each evaluation sample. On the basis of the intensity of the lemon-derived degradation odor, the lemon-derived degradation odor-masking effect was evaluated.

### [Evaluation criteria for lemon-derived degradation odor intensity]

0: Lemon-derived degradation odor intensity of the normal sample
5: Lemon-derived degradation odor intensity of a mixture of the normal sample and degraded sample (normal sample degraded sample = 1: 1)
10: Lemon-derived degradation odor intensity of the degraded sample

The results are shown in Table 4. All of the evaluated compounds showed lemon-derived degradation odor-masking effect.

### [Table 4]

**Table 4**

| Compound | Concentration of addition (ppm) | Evaluation score | Comment |
|---|---|---|---|
| trans,trans-2,4-Decadienal | 0.002 | 6 | Initial and middle degradation odors were suppressed. |
| trans,trans-2,4-Nonadienal | 0.002 | 7.5 | Initial and middle degradation odors were suppressed. |
| 2-Methylbenzenethiol | 0.165 | 8 | Initial, middle and after degradation odors were suppressed. |
| S-(2-Methyl-3-furyl) ethanethioate | 0.120 | 6 | Initial and middle degradation odors and middle and after browning odors were suppressed. |
| Piperine | 6.667 | 8 | Initial and middle degradation odors were suppressed. |
| Nootkatone | 10.000 | 6 | Initial, middle and after degradation odors were suppressed. |
| Sclareol | 16.667 | 6 | Initial, middle and after degradation odors were suppressed. |

### [Test Example 5]

### (Preparation of evaluation samples)

A commercially available lemon beverage (Chelate Lemon W Lemon (Pokka Sapporo), stored under refrigeration after purchased) was used as a normal sample. This lemon beverage was stored at 44°C for 2 weeks to generate a lemon-derived degradation odor and was used as a degraded sample. Evaluation samples were prepared by adding each of the compounds shown in Table 5 to the degraded sample at the concentrations shown in the same.

### (Evaluation of lemon-derived degradation odor-masking effect)

The lemon-derived degradation odor intensity of each evaluation sample was evaluated by putting 5 ml of the sample into the mouth and naturally swallowing it. The lemon-derived degradation odor intensity was scored as 0 to 10 on the basis of the following evaluation criteria. The evaluation was performed by a panel of 2 experts, and an average value of the results was calculated for each evaluation sample. On the basis of the intensity of the lemon-derived degradation odor, the lemon-derived degradation odor-masking effect was evaluated.

### [Evaluation criteria for lemon-derived degradation odor intensity]

0: Lemon-derived degradation odor intensity of the normal sample
5: Lemon-derived degradation odor intensity of a mixture of the normal sample and degraded sample (normal sample:degraded sample = 1: 1)
10: Lemon-derived degradation odor intensity of the degraded sample

The results are shown in Table 5. All of the evaluated combinations of compounds showed lemon-derived degradation odor-masking effect.

### [Table 5]

**Table 5**

| Compound | Concentration of addition (ppm) | | | |
|---|---|---|---|---|
| | Sample 1 | Sample 2 | Sample 3 | Sample 4 |
| Cinnamaldehyde | 0.20 | - | - | - |
| trans,trans-2,4-Decadienal | - | 0.20 | - | - |
| S-(2-Methyl-3-furyl) ethanethioate | - | - | 0.12 | - |
| Nootkatone | - | - | - | 10.00 |
| Sclareol | 16.67 | 16.67 | 16.67 | 16.67 |
| Evaluation score | 5.25 | 5 | 5.5 | 5.5 |
| Comment | Initial and middle degradation odors were suppressed. | Initial, middle, and after degradation odors were suppressed, and browning odor was also suppressed. | Initial and middle degradation odors were suppressed. | Initial and middle degradation odors were suppressed. |

### INDUSTRIAL APPLICABILITY

According to the present invention, p-cresol odor can be suppressed.

## Claims

1. A composition for suppressing p-cresol odor of a food, comprising the following ingredient (A):
(A) at least one type of ingredient selected from the group consisting of magnolol, propyl gallate, 2-methylbenzenethiol, E-β-damascenone, cinnamyl cinnamate, 2-thiophenethiol, 2-furfurylthiol, tetradecanal, sclareol, trans,trans-2,4-decadienal, nootkatone, piperine, trans,trans-2,4-nonadienal, and S-(2-methyl-3-furyl) ethanethioate.

2. A composition for producing a food, comprising the following ingredient (A):
(A) at least one type of ingredient selected from the group consisting of magnolol, propyl gallate, 2-methylbenzenethiol, E-β-damascenone, cinnamyl cinnamate, 2-thiophenethiol, 2-furfurylthiol, tetradecanal, sclareol, trans,trans-2,4-decadienal, nootkatone, piperine, trans,trans-2,4-nonadienal, and S-(2-methyl-3-furyl) ethanethioate.

3. The composition according to claim 2, wherein the food is a food of which p-cresol odor is suppressed.

4. The composition according to any one of claims 1 to 3, wherein the food comprises p-cresol and/or an ingredient that can generate p-cresol.

5. The composition according to claim 4, wherein the ingredient that can generate p-cresol is citral.

6. A method for suppressing p-cresol odor of a food, comprising the step of adding the following ingredient (A) to a raw material of the food:
(A) at least one type of ingredient selected from the group consisting of magnolol, propyl gallate, 2-methylbenzenethiol, E-β-damascenone, cinnamyl cinnamate, 2-thiophenethiol, 2-furfurylthiol, tetradecanal, sclareol, trans,trans-2,4-decadienal, nootkatone, piperine, trans,trans-2,4-nonadienal, and S-(2-methyl-3-furyl) ethanethioate.

7. A method for producing a food, comprising the step of adding the following ingredient (A) to a raw material of the food:
(A) at least one type of ingredient selected from the group consisting of magnolol, propyl gallate, 2-methylbenzenethiol, E-β-damascenone, cinnamyl cinnamate, 2-thiophenethiol, 2-furfurylthiol, tetradecanal, sclareol, trans,trans-2,4-decadienal, nootkatone, piperine, trans,trans-2,4-nonadienal, and S-(2-methyl-3-furyl) ethanethioate.

8. The method according to claim 7, wherein the food is a food of which p-cresol odor is suppressed.

9. The method according to any one of claims 6 to 8, wherein the food or the raw material comprises p-cresol and/or an ingredient that can generate p-cresol.

10. The method according to claim 9, wherein the ingredient that can generate p-cresol is citral.

11. The method according to claim 9 or 10, wherein the method comprises the step of heating the food or raw material comprising the ingredient that can generate p-cresol.

12. The method according to any one of claims 6 to 11, wherein the ingredient (A) is added so that concentration thereof at the time of eating is 0.001 ppt (w/w) to 1000 ppm (w/w).
